# EUROPÄISCHE PATENTSCHRIFT

(11) **EP 1 861 326 B1**
(45) Veröffentlichungstag und Bekanntmachung des Hinweises auf die Patenterteilung: **17.12.2008**
(21) Anmeldenummer: 06723322.1
(22) Anmeldetag: 09.03.2006
(51) Int. Cl.: B65G 47/84, B65G 47/71

(54) **VORRICHTUNG ZUM ÜBERGEBEN VON HOHLKÖRPERN MIT EINER DREHANGETRIEBENEN TROMMEL VON EINEM EINLAUFENDEN AUF EIN AUSLAUFENDES TRANSPORTMITTEL**
DEVICE FOR TRANSFERRING A HOLLOW BODY BY MEANS OF A ROTATED DRUM, FROM A SUPPLY CONVEYING SYSTEM TO A DISCHARGE CONVEYING SYSTEM
DISPOSITIF DE TRANSFERT DE CORPS CREUX AU MOYEN D'UN TAMBOUR ENTRAINE EN ROTATION, D'UN SYSTEME DE TRANSPORT D'AMENEE A UN SYSTEME DE TRANSPORT DE DECHARGE

(30) Priorität: 10.03.2005 DE 102005011130
(43) Veröffentlichungstag der Anmeldung: 05.12.2007
(73) Patentinhaber: Sprimag Spritzmaschinenbau GmbH & Co KG, 73230 Kirchheim (DE)
(72) Erfinder: RAMMINGER, Dietmar, 72589 Westerheim (DE)
(74) Vertreter: Keilitz, Wolfgang
(86) Internationale Anmeldenummer: PCT/EP2006/002175
(87) Internationale Veröffentlichungsnummer: WO 2006/094807

(56) Entgegenhaltungen:
- DE-A1- 2 817 825
- DE-C- 19 540 158
- DE-C1- 4 010 601
- US-A- 3 093 245
- US-A- 3 685 633
- US-A- 4 558 555
- US-A- 5 070 994
- PATENT ABSTRACTS OF JAPAN Bd. 1995, Nr. 11, 26. Dezember 1995 (1995-12-26) & JP 07 214009 A (MITSUBISHI MATERIALS CORP), 15. August 1995 (1995-08-15)

## Beschreibung

Die Erfindung betrifft eine Übergabeeinrichtung zum Übergeben von Hohlkörpern, wie Dosen oder Tuben mit den Merkmalen des Oberbegriffs des Hauptanspruchs, von einem einlaufenden auf ein auslaufendes Transportmittel.

Eine derartige Einrichtung ist aus der DE 195 40 158 C2 bekannt. Durch diese Einrichtung werden Gegenstände, wie Dosen u. dgl. von einem ersten Transportmittel auf ein zweites Transportmittel übergeben, wobei die Geschwindigkeit und/oder die Lagen der Gegenstände bei der Übergabe zueinander verändert werden müssen. Bei dieser bekannten Einrichtung ist eine Übergabetrommel vorgesehen, in der die Dosen in Transportschalen und mittels Unterdruck gehalten werden, wobei die Transportschalen schwenkbar um Schwenkachsen gelagert sind. Die Transportschalen werden an den Übergabestellen mittels Kurvensteuerung beschleunigt bzw. verzögert.

Mit dieser Vorrichtung ist jedoch eine Aufteilung einer mehrreihigen in eine einreihige Transportreihe nicht möglich.

Aus der DE 40 10 601 C1 ist eine Übergabeeinrichtung bekannt, die eine axiale Verschiebung von Hohlkörpern auf einer Trommel vorsieht, wobei eine notwendige Geschwindigkeitsanpassung nur mit Hilfe einer separaten Trommel möglich ist, so dass gegenüber diesem Stand der Technik eine Vereinfachung der Einrichtung erzielt werden soll.

Aufgabe der Erfindung ist es, eine Einrichtung zum Übergeben von Hohlkörpern anzugeben, die gleichzeitig deren Lageänderungen durch Verschieben und auch ein Ausgleichen durch Geschwindigkeitsanpassungen an den Übergabestellen ermöglicht.

Diese Aufgabe wird durch eine Einrichtung der eingangs beschriebenen Art gemäß dem Oberbegriff des Anspruchs 1 mit den kennzeichnenden Merkmale des Anspruchs 1 gelöst, wodurch eine Ausgleichs-Verschiebe-Trommel geschaffen ist.

Vorzugsweise Ausgestaltungen der Erfindung sind den Unteransprüchen zu entnehmen.

Nachstehend wird die Erfindung an einem Ausführungsbeispiel mit einem einreihig einlaufenden Transportmittel, einer Ausgleichs-Verschiebe-Trommel, die durch Verschieben eine Lageveränderung der zugeführten Hohlkörper auf zwei Reihen und unter gleichzeitiger Geschwindigkeitsanpassung deren Abtransport durch ein zweireihiges Transportmittel unter Bezug auf Zeichnungen näher erläutert. Es zeigt:
- Fig. 1: eine Trommel mit zu- und abführenden Transportmitteln im Querschnitt;
- Fig. 2: die Trommel gemäß Fig. 1 in Draufsicht;

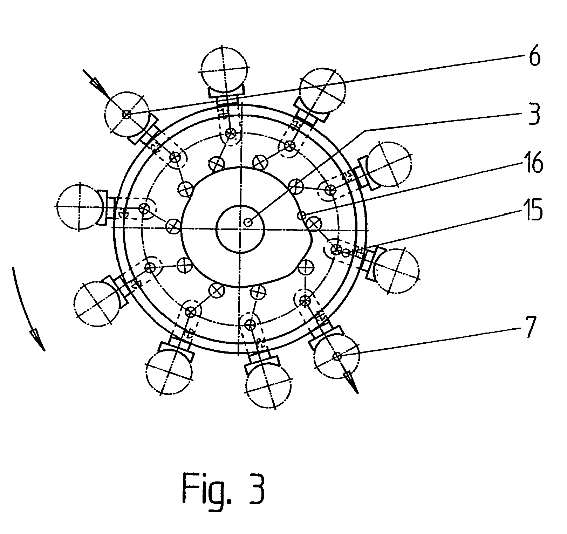

- Fig. 3: die kinematische Verbindung jedes zweiten von einer Steuerkurve geführten Schalenträgers.

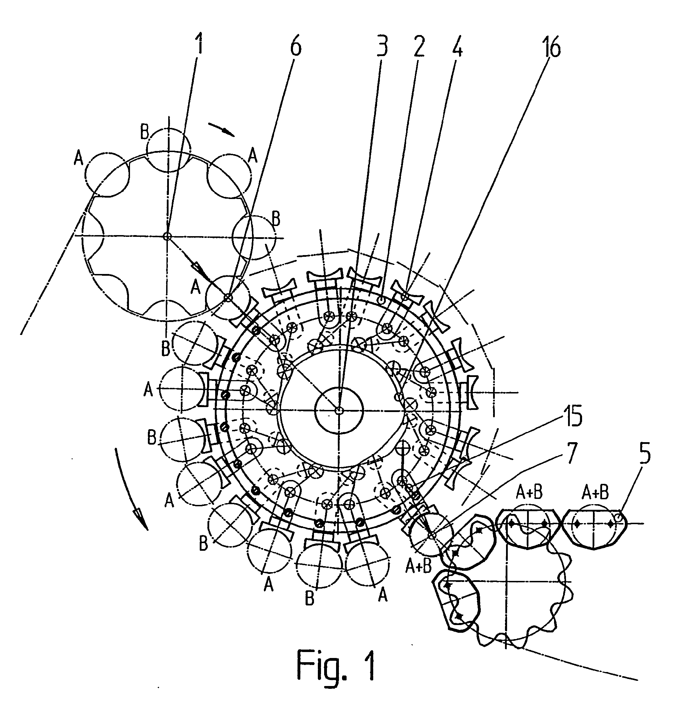

Die in Fig. 1 dargestellte Einrichtung weist ein einlaufendes einreihiges Transportmittel 1 mit Hohlkörpern A und B auf. Sie weist ferner eine drehangetriebene Trommel 2 mit einer zentralen Hohlachse 3 auf. Auf der Trommel 2 werden die einzeln ankommenden Hohlkörper A und B in Transportschalen 4 aufgenommen und weiter transportiert. Beim Weitertransport werden sie in ihrer Lage verändert, so dass alle Hohlkörper A bzw. B zu zwei nebeneinander angeordneten parallelen Reihen einem zweiten Transportmittel 5 übergeben werden.

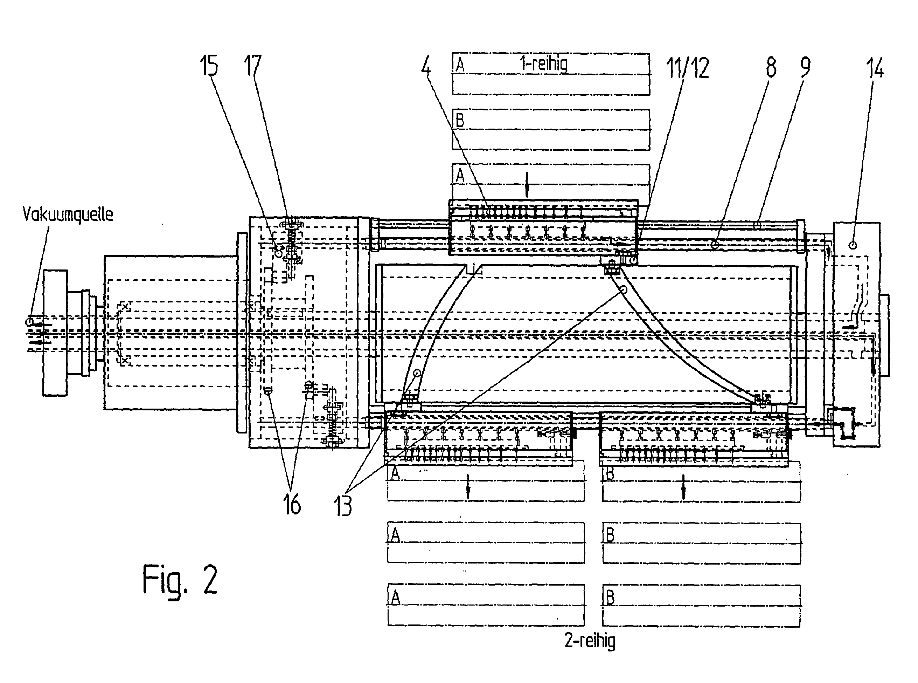

In den vorgesehenen Übergabepunkten 6 bzw. 7 erhalten die Hohlkörper A und B die gleiche Transportgeschwindigkeit, wie sie das erste 1 bzw. zweite Transportmittel 5 aufweisen. Hierzu weist die Trommel 2 schwenkbare Rohre 8 auf, die zur Zuleitung von Vakuum dienen. Im Abstand von den Rohren 8 ist jeweils eine parallele Achse 9 für die Transportschalen 4 angeordnet. Die Transportschalen 4 sind austauschbar auf Zwischenschlitten 11 angeordnet. An den Zwischenschlitten 11 sind Vorsprünge 12 in Kurvenbahnen 13 der Trommel 2 zur Lageverschiebung der Hohlkörper in zwei parallele Reihen einführbar. Gegebenenfalls können sie auch in drei oder mehr parallele Reihen (nicht dargestellt) verschoben werden. Im Ausführungsbeispiel sind zwei Kurvenbahnen 13, 13' dargestellt, so dass alle Hohlkörper A in einer ersten Reihe und alle Hohlkörper B in einer parallelen zweiten Reihe gleichachsig übergeben werden (s. Fig. 2).

Auf der einen (rechten) Seite der Trommel 2 münden die Zuleitungsrohre 8 in einer Steuerscheibe 14, durch die die Zufuhr des Vakuums zu den Transportschalen 4 gesteuert werden kann, um die Hohlkörper A, B während ihres Transports um die Trommel 2 festzuhalten und zu fixieren.

Auf der gegenüberliegenden (linken) Seite der Trommel 2 sind die schwenkbaren Zuleitungsrohre 8 über Schwenkhebel 15 in Kontakt mit Steuerkurven 16. Dieser Kontakt kann beispielsweise durch Federn 17 aufrechterhalten werden. Die Steuerkurven 16 bewirken, dass im Übergabepunkt 6 die jeweilige Transportschale 4 auf der Trommel 2 die gleiche Geschwindigkeit, wie das erste Transportmittel 1 und im Übergabepunkt 7 die gleiche Geschwindigkeit, wie das zweite Transportmittel 5 aufweist. Durch diese über die Steuerkurven 16 bewirkte Geschwindigkeitsanpassungen werden störungsfreie und sichere Übergaben ermöglicht.

Vorzugsweise sind die Transportschalen 4 auswechselbar, z. B. durch Steckverbindungen an der Trommel 2 angeordnet, wodurch ohne jegliches Werkzeug durch einfaches Austauschen der Transportschalen 4 eine Anpassung an unterschiedliche Durchmessergrößen der Hohlkörper A, B möglich ist.

Durch die Steuerscheibe 14 wird der Verbrauch an Vakuum gesteuert und auf das notwendige Minimum beschränkt, wobei in allen Übergabepunkten 6, 7 gegebenenfalls ein Ausblasen der Transportschalen 4 zu störungsfreien Übergaben möglich ist.

Die Vorrichtung ist auch insgesamt wirtschaftlicher, da sie nur einen Antrieb für die kontinuierliche Drehbewegung der Trommel 2 und gegebenenfalls auch der Transportmittel 1, 5 erfordert bzw. mit einem schon vorhandenen Antrieb (nicht dargestellt) gekoppelt werden kann, so dass sich auch die Anschaffungskosten bedeutend wirtschaftlicher erweisen.

## Patentansprüche

1. Übergabeeinrichtung für Hohlkörper (A, B), wie Dosen oder Tuben, von einem einlaufenden Transportmittel (1) auf ein auslaufendes Transportmittel (5) mit einer drehangetriebenen Trommel (2) mit Transportschalen (4) zum Halten der Hohlkörper (A, B), die an der Trommel (2) schwenkbar um zur Trommelachse (3) parallele Rohre (8) angeordnet und mit Unterdruck beaufschlagbar sind, wobei die Transportschalen (4) zur Erzeugung einer ungleichförmigen Transportgeschwindigkeit entlang einer Steuerkurve (16) zwangsgeführt sind, wobei die Transportschalen (4) auf den schwenkbaren Rohren (8) zur Zuleitung des Unterdrucks über starr mit ihnen verbundene Schwenkhebel (15) mit mindestens zwei Steuerkurven (16) zur Anpassung an die Geschwindigkeiten der ein- und auslaufenden Transportmittel (1, 5) an den jeweiligen Übergabepunkten (6,7) in Kontakt stehen,
**dadurch gekennzeichnet, dass** die Transportschalen (4) auf den schwenkbaren Rohren (8) axial und einzelbeweglich auf Zwischenschlitten (11) in Kurvenbahnen (13) der Trommel (2) verschiebbar sind.

2. Übergabeeinrichtung für Hohlkörper nach Anspruch1, **dadurch gekennzeichnet, dass** die Kurvenbahnen (13) derart ausgebildet sind, dass die Transportschalen an einem der Übergabepunkte (6, 7) mehrreihig nebeneinander, und am anderen Übergabepunkt (6, 7) einreihig hintereinander angeordnet werden.

3. Übergabeeinrichtung nach Anspruch 1, **dadurch gekennzeichnet, dass** auf den Rohren (8) fest mit ihnen verbundene Achsen (9) für die Transportschalen (4) vorgesehen sind.

4. Übergabeeinrichtung nach Anspruch 1 oder Anspruch 3, **dadurch gekennzeichnet, dass** die Steuerkurven (16) und/oder die zur Vakuumversorgung dienenden Steuerscheiben (14) seitlich der Trommel (2) angeordnet sind.

5. Übergabeeinrichtung nach Anspruch 4, **dadurch gekennzeichnet, dass** die Steuerkurven (16) und die damit kontaktierenden Schwenkhebel (15) in einem separaten Gehäuse angeordnet sind, in das die schwenkbaren Rohre (8) dichtend geführt sind.

6. Übergabeeinrichtung nach einem der Ansprüche 1 bis 5, **dadurch gekennzeichnet, dass** die Transportschalen (4) austauschbar auf den Zwischenschlitten (11) angeordnet sind.

7. Übergabeeinrichtung nach einem der Ansprüche 1 bis 6, **dadurch gekennzeichnet, dass** in den Übergabepunkten (6, 7) Druckluft zum Ausblasen der jeweils zu übergebenden Hohlkörper (A, B) aus den Transportschalen (4) zugeführt wird.

## Claims

1. Device for the transfer of hollow bodies (A, B), such as cans or tubes, from one incoming means of transport (1) to one outgoing means of transport (5) comprising one rotary driven drum (2) with transport trays (4) for holding the hollow bodies (A, B) which are arranged on the drum (2) swivably around tubes (8), which tubes are parallel to the drum axis (3) and to which vacuum pressure can be applied, wherein the transport trays (4) being positively guided along a radial cam (16) to perform a non-uniform transport speed, and wherein the transport trays (4) being arranged on the swivable, vacuum conducting tubes (8) are - via swivel levers (15) rigidly connected with them - in contact with at least two radial cams (16) for adjustment to the speeds of the incoming and outgoing means of transport (1, 5) at the corresponding transfer points (6, 7), **characterized in that** the transport trays (4), which are arranged on the swivable tubes (8), are axially and individually movable on intermediate slides (11) in curved paths (13) of the drum (2).

2. Device for the transfer of hollow bodies according to claim 1, **characterized in that** the curved paths (13) are formed in such a way that the transport trays are, at one of the transfer points (6, 7), arranged in several rows side by side, and, at the other transfer point (6, 7) arranged in a single row one after another.

3. Device for the transfer of hollow bodies according to claim 1, **characterized in that** there are provided axes (9) for the transport trays (4) on the tubes (8) which are rigidly connected with them.

4. Device for the transfer of hollow bodies according to one of the claims 1 or 3, **characterized in that** the radial cams (16) and/or the control disks (14) for the vacuum supply are arranged on the side of the drum (2).

5. Device for the transfer of hollow bodies according to claim 4, **characterized in that** the radial cams (16) and the swivel levels (15) contacting therewith are provided in a separate housing into which the swivable tubes (8) are guided in a sealing manner.

6. Device for the transfer of hollow bodies according to any one of the claims 1 to 5, **characterized in that** the transport trays (4) are exchangeably provided on the intermediate slides (11).

7. Device for the transfer of hollow bodies according to any one of the claims 1 to 6, **characterized in that** in the transfer points (6, 7), compressed air is supplied for releasing hollow bodies (A, B) to be transferred out of the transport trays (4).

## Revendications

1. Dispositif de transfert de corps creux (A, B), tels que des boîtes ou des tubes, d'un moyen de transport d'amenée (1) sur un moyen de transport de décharge (5), avec un tambour entraîné en rotation (2) avec des godets de transport (4) pour maintenir les corps creux (A, B), qui sont disposés sur le tambour (2) en étant susceptibles de pivoter autour de tubes (8) parallèles à l'axe du tambour (3) et qui sont susceptibles d'être soumis à une dépression, pour créer une vitesse de transport irrégulière, les godets de transport (4) étant guidés de forcele long d'une came de commande (16), les godets de transport (4) étant en contact aux points de transfert (6, 7) concernés avec au moins deux cames de commande (16), sur les tubes pivotants (8), pour alimenter la dépression via des leviers pivotants (15) auxquels ils sont reliés de façon rigide, pour l'adaptation aux vitesses des moyens de transport d'amenée et de décharge (1, 5),
**caractérisé en ce que** les godets de transport (4) sont déplaçables en translation sur les tubes pivotants (8) en direction axiale et en étant mobiles individuellement sur des chariots intermédiaires (11) dans des chemins incurvés (13) du tambour (2).

2. Dispositif de transfert de corps creux selon la revendication 1, **caractérisé en ce que** les chemins incurvés (13) sont conçus de sorte que, sur l'un des points de transfert (6, 7) les godets de transport soient disposés sur plusieurs rangées les uns à côté des autres et sur l'autre point de transfert (6, 7), ils soient disposés sur une rangée les uns derrière les autre.

3. Dispositif de transfert selon la revendication 1, **caractérisé en ce que** des axes (9) fixement reliés avec eux sont prévus sur les tubes (8) pour les godets de transport (4).

4. Dispositif de transfert selon la revendication 1 ou la revendication 3, **caractérisé en ce que** les cames de commande (16) et/ou les plateaux de commande (14) servant à l'alimentation en vide sont disposés latéralement du tambour (2).

5. Dispositif de transfert selon la revendication 4, **caractérisé en ce que** les cames de commande (16) et les leviers pivotants (15) en contact avec ces dernières sont disposées dans un carter séparé, dans lequel les tubes pivotants (8) sont guidés en assurant l'étanchéité.

6. Dispositif de transfert selon l'une quelconque des revendications 1 à 5, **caractérisé en ce que** les godets de transport (4) sont disposés de manière interchangeable sur les chariots intermédiaires (11).

7. Dispositif de transfert selon l'une quelconque des revendications 1 à 6, **caractérisé en ce que** dans les points de transfert (6, 7) de l'air comprimé est alimenté pour souffler les corps creux (A, B) respectifs devant être transférés hors des godets de transport (4).
